# EUROPÄISCHE PATENTSCHRIFT

(11) **EP 0 852 998 B1**
(45) Veröffentlichungstag und Bekanntmachung des Hinweises auf die Patenterteilung: **10.10.2001**
(21) Anmeldenummer: 97119839.5
(22) Anmeldetag: 13.11.1997
(51) Int. Cl.: B29D 31/508, A43D 119/00, B29D 31/51, B29C 45/16

(54) **Verfahren und Vorrichtung zur vollautomatischen Herstellung von Schuhen**
Method and apparatus for automatic manufacturing of shoes
Méthode et dispositif de fabrication automatique de chaussures

(30) Priorität: 08.01.1997 DE 19700171
(43) Veröffentlichungstag der Anmeldung: 15.07.1998
(73) Patentinhaber: KLÖCKNER DESMA SCHUHMASCHINEN GmbH, 28832 Achim (DE)
(72) Erfinder: Speckhahn, Hermann, Dr., 27299 Langwedel (DE); Rebers, Günter, 28832 Achim (DE); Schütte, Wolfgang, 28832 Achim (DE); Hannemann, Axel, 33739 Bielefeld (DE)
(74) Vertreter: Röther, Peter, Dipl.-Phys.

(56) Entgegenhaltungen:
- EP-A- 0 270 047
- DE-A- 3 623 566
- PATENT ABSTRACTS OF JAPAN vol. 014, no. 074 (C-0687), 13. Februar 1990 (1990-02-13) & JP 01 291805 A (ACHILLES CORP), 24. November 1989 (1989-11-24)

## Beschreibung

Die Erfindung betrifft ein Verfahren zur vollautomatischen Herstellung von Schuhen, bei dem eine mindestens einlagige Sohle direkt an einen auf einen Leisten gezogenen Schaft angespritzt wird, wobei Formwerkzeuge zur Formung der Sohle nacheinander vor mindestens ein Einspritzaggregat gefahren werden.

Derartige bekannte Vorrichtungen weisen beispielsweise einen Rundtisch auf, auf dem radial bis zu 40 Formwerkzeuge fixiert und justiert sind. Diese Formwerkzeuge bestehen aus einem unteren Bodenstempel, mindestens zwei Seitenformteilen und einem oberen Formhohlraumverschluß, der je nach zu fertigender Sohle ein Verdränger (Blindplatte) oder ein mit einem Schaft bezogener Leisten sein kann. Jedem Formwerkzeug auf der Rundtischanlage sind Aktoren zugeordnet, die zum Öffnen und Schließen bzw. zum Absenken und Hochfahren des Bodenstempels sowie zum Absenken und Hochfahren des Verdrängers bzw. des Leistens dienen. Der Rundtischanlage ist mindestens ein Einspritzaggregat zugeordnet, an das nacheinander die Formwerkzeuge in geschlossenem Zustand herangefahren werden. Die Düse des Einspritzaggregats legt sich an den Angußkanal des Formwerkzeugs an, wonach die zur Fertigung der Sohle erforderliche Kunststoff- oder Gummimasse in den Formhohlraum eingespritzt wird. Nachteilig bei derartigen Vorrichtungen ist der hohe Montageaufwand, z.B. beim Wechseln von einer Schuhform zur anderen sowie die Tatsache, daß beim Spritzen von mehrlagigen Sohlen zunächst immer eine gewisse Zeit verstreichen muß, bis eine Sohlenschicht hinreichend verfestigt ist, damit die zweite bzw. weitere Sohlenschicht gespritzt werden kann. Somit sind bei diesem Verfahren strenge Taktfolgen gefordert.

Darüber hinaus ist auch der große konstruktive Aufwand in Bezug auf das Erfordernis der hohen Aktorenanzahl von Nachteil.

Ein weiterer Nachteil besteht gerade bei der Herstellung von mehrlagigen Sohlen darin, daß der Wechsel von Verdränger (Blindplatte) und Leisten einen weiteren unerwünschten Zeitaufwand mit sich bringt.

Der Erfindung liegt daher die Aufgabe zugrunde, ein Verfahren der eingangs genannten Art so zu führen, daß ein individueller Prozeßablauf pro Artikel ermöglicht wird und durch Entzerrung des Prozessablaufes eine Produktionssteigerung erfolgen kann.

Die Erfindung löst diese Aufgabe mit Hilfe der Merkmale des Anspruchs 1.

Weiter wird diese Aufgabe gelöst durch eine Vorrichtung gemäß den Merkmalen des Anspruchs 8.

Vorteilhafte Weiterbildungen bzw. Ergänzungen der Erfindung ergeben sich aus den Merkmalen der Unteransprüche.

Das Prinzip der vorliegenden Erfindung liegt darin, daß die Formwerkzeuge individuell in gewünschter Abfolge unabhängig vom herzustellenden Schuh mittels eines Transportsystems in einem Kreislauf zunächst eine Vorbereitungsstation durchlaufen, welche mit Aktoren versehen ist, die dafür sorgen, daß das Formwerkzeug geschlossen wird und so vorbereitet einer beispielsweise aus einem Rundtisch bestehenden Einspritzstation mittels eines Handhabungsautomaten zugeführt werden, in der sie fixiert und justiert werden. In dieser Einspritzstation werden die Formwerkzeuge dann wie bei den bekannten Vorrichtungen nacheinander mit einem Einspritzaggregat in Kontakt gebracht. Der Einspritzvorgang erfolgt, und das gefüllte Formwerkzeug wird mittels des Handhabungsautomaten wieder dem Transportsystem übergeben und von diesem in eine Pufferstation geleitet, in der es entsprechend der gewünschten Aushärtzeit verbleibt und aus der es schließlich in eine Entnahmestation gefördert wird, die mit Aktoren versehen ist, die das Öffnen des Formwerkzeugs und die Schuhentnahme aus dem Formwerkzeug bewirken. Nachdem der fertige Schuh aus dem geöffneten Formwerkzeug entfernt worden ist, wird das geleerte Formwerkzeug über das Transportsystem in eine Reinigungsstation gefördert, aus der es entweder dem Kreislauf wieder zugeführt oder aber aus dem Kreislauf entfernt wird.

Die Vorteile der Erfindung liegen in der Aufteilung der Verfahrensoperationen. Es ist hiermit ein flexibler Verfahrensablauf und ein individueller Prozeßablauf pro Artikel ermöglicht. Die Formwerkzeuge bestimmen selbst ihren Weg. Es gibt keine strengen Taktfolgen mehr. Darüber hinaus ist ein großer Vorteil der Erfindung die Ausbaubarkeit und die Anpassung an neue Verfahren durch Austausch von Bauteilen.

Durch die geringe Anzahl von Aktoren ist zum einen ein geringerer konstruktiver Aufwand und hiermit verbunden eine hohe Wirtschaftlichkeit gewährleistet. Dadurch, daß jede Form zunächst die Vorbereitungsstation durchlaufen muß, dann aber in so vorbereitetem Zustand der Einspritzstation zugeführt werden kann, ergeben sich beispielsweise lediglich dreimal extreme Rahmenbewegungen gegenüber 40 Rahmenbewegungen in einer vierzigstelligen Maschine.

Eine bevorzugte Verfahrensvariante ist durch die Merkmale des Anspruchs 2 gegeben, die auf einer Vorrichtung durchgeführt wird, wie sie in Anspruch 8 offenbart ist. Bei dieser Variante sind zwei Einspritzstationen vorgesehen, von denen die eine lediglich die Laufsohle und die andere die Zwischensohle herstellt und gleichzeitig den Anspritzvorgang an den Schaft bewirkt. Jeder dieser Einspritzstationen ist eine Vorbereitungsstation vorgeschaltet. Die im Kreislauf zuerst angeordnete Vorbereitungsstation verfügt über Aktoren, die den Bodenstempel nach oben fahren, die Seitenteile zusammenfahren und einen dem Formwerkzeug zugeordneten Verdränger von oben einsetzen.

Die der zweiten Einspritzstation zugeordnete VorbereitungsstaDie der zweiten Einspritzstation zugeordnete Vorbereitungsstation ist mit Aktoren versehen, die zum einen den Bodenstempel in vertikaler Richtung bewegen können und zum anderen den Austausch des Verdrängers (Blindplatte) gegen einen von außen in den Kreislauf geförderten, mit einem Schaft versehenen Leisten bewirken. Jeder der Einspritzstationen ist eine Pufferstation zugeordnet, in der die Formwerkzeuge entsprechend ihrer gewünschten Aushärtzeit verweilen können.

Um verschiedene Aushärtzeiten realisieren zu können, verfügt jede Pufferstation über mehrere parallel nebeneinander angeordnete Transportstrecken.

Vorteilhafterweise ist der ersten Vorbereitungsstation eine Einsprühvorrichtung vorgeschaltet, in der die Formflächen mit einem Trennmittel besprüht werden.

Zur Auflockerung der Taktfolgen ist zwischen jeder Vorbereitungsstation und jeder Enspritzstation eine weitere Pufferstation vorgesehen. Handhabungsautomaten zwischen diesen Pufferstationen und den Einspritzstationen nehmen das jeweilige Formwerkzeug und setzen es von dem Transportband in die Einspritzstation ein.

Derartige Einspritzstationen können - wie oben ausgeführt - Rundtischanlagen sein, es können aber auch lineare Anlagen sein.

In den Pufferstationen und den Einspritzstationen können Mittel zur Temperierung der Formwerkzeuge vorgesehen sein.

Ein besonderer Vorteil des zuletzt genannten Ausführungsbeispiels der Erfindung liegt darin, daß hier sowohl einlagige als auch mehrlagige Sohlen angespritzt werden können. Soll ein Schuh mit einer einlagigen Sohle versehen werden, werden die Formwerkzeuge aus der ersten Vorbereitungsstation an der ersten Einspritzstation und an der dieser nachgeordneten Pufferstation vorbei bewegt und gelangen direkt in die zweite Vorbereitungsstation, wo der mit dem Schaft bezogene Leisten eingesetzt wird, wonach dann der Einspritzvorgang erfolgen kann. Selbstverständlich ist hierbei der Formhohlraum nicht mit einem Verdränger verschlossen. Sollen zweilagige Sohlen angespritzt werden, durchläuft jede Formstation zunächst die erste Einspritzstation zur Formung der Laufsohle und dann die zweite Einspritzstation zur Formung der Zwischensohle.

Jedes Formwerkzeug ist mit einem Speicherelement versehen, welches Daten für den Transport und Einspritzvorgang enthält. Derartige Daten können sich auf den jeweils zu treffenden Leisten auf die individuelle Einspritzzeit, auf die Aushärtzeit, auf die Einspritzgeschwindigkeit etc. beziehen. Das Speicherelement ist vorzugsweise vom Read-write-Typ.

Obwohl im vorliegenden Ausführungsbeispiel lediglich zwei Einspritzstationen vorgesehen sind, können selbstverständlich auch mehr als als zwei Einspritzstationen mit zugeordneten Pufferstationen und Vorbereitungsstationen vorgesehen sein.

Die Erfindung wird im folgenden anhand eines Ausführungsbeispiels dargestellt und näher erläutert.

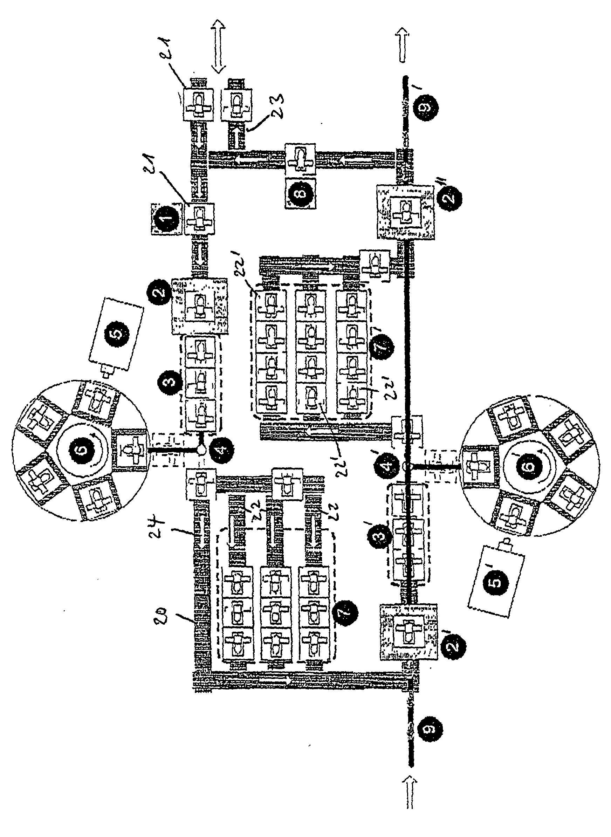

Die einzige Zeichnung zeigt neben der konstruktiven Anordnung der einzelnen Anlageelemente auch den Ablaufplan für die Herstellung von Schuhen mit einlagigen bzw. zweilagigen Sohlen.

Dargestellt ist ein aus einen Kreislauf bildenden Transportbändern 20 bestehendes Transportsystem für Formwerkzeuge. Die Formwerkzeuge 21 bestehen aus zwei Formseitenteilen, einem Bodenstempel und im vorliegenden Fall aus einem den Formhohlraum nach oben abschließenden Verdränger. Den Pfeilen folgend von oben rechts gelangt das "nackte" Formwerkzeug 21 in eine Einsprühstation 1, in der die Formflächen mit einem Trennmittel besprüht werden. Von dieser Einsprühstation 1 gelangt das Formwerkzeug 21 in eine erste Vorbereitungsstation 2, in dem die Form geschlossen wird. Das heißt, daß der Bodenstempel nach oben verschoben wird, die Seitenteile zusammengefahren werden und der Verdränger den Formhohlraum nach oben abschließt. Aus dieser Vorbereitungsstation 2 gelangt das Formwerkzeug in die erste Pufferstation 3. Aus dieser Pufferstation 3 entnimmt ein Handhabungsautomat 4 die Formwerkzeuge 21 nacheinander und setzt diese ebenfalls nacheinander auf den Rundtisch einer ersten Einspritzstation 6. Dieser Einspritzstation 6 ist ein Einspritzaggregat 5 zugeordnet, an das nacheinander jedes Formwerkzeug durch taktweise Rotation des Rundtisches herangefahren wird. Das gefüllte Formwerkzeug wird mittels des Rundtisches nach entsprechenden Einspritztakten wieder an den Handhabungsautomaten 4 herangebracht, der das Formwerkzeug 21 wieder auf das Transportband 20 abstellt. Von hier aus gelangt das Formwerkzeug in die zweite Pufferstation 7, die im vorliegenden Beispiel aus drei parallel nebeneinander angeordneten Transportstrecken 22 besteht. Jede dieser Transportstrecken 22 ist für eine individuelle Aushärtzeit der gespritzten Sohlenschicht verantwortlich. Aus der Pufferstation 7 gelangt das Formwerkzeug 21 über das Transportband 20 in eine zweite Vorbereitungsstation 2', in welcher der Verdränger entfernt wird und ein von links kommender, über ein eigenes Fördersystem angelieferter mit einem Schaft bezogener Leisten 9 eingesetzt wird. Der Bodenstempel wird um einen gewissen Betrag abgesenkt, so daß zwischen der bereits hergestellten Sohlenschicht (Laufsohle) und dem Leisten ein Zwischenraum entsteht, in den das Material für die Zwischensohle eingespritzt werden soll.

Aus der zweiten Vorbereitungsstation 2' gelangt das Formwerkzeug 21 in die dritte Pufferstation 3', aus der in gewünschter Folge die vorbereiteten Formwerkzeuge 21 über einen zweiten Handhabungsautomaten 4' in eine zweite Einspritzstation 6' eingesetzt werden. Auch diese zweite Einspritzstation verfügt über einen Rundtisch. Dieser Einspritzstation 6' zugeordnet ist ein zweites Einspritzaggregat 5', welches den eben beschriebenen Formhohlraum mit dem Sohlenmaterial füllt. Nach Durchwanderung der Rundtischanlage 6' entnimmt der zweite Handhabungsautomat 4' nacheinander die gefüllten Formwerkzeuge 21 und setzt sie wieder auf das Transportband 20, von wo aus sie in eine vierte Pufferstation 7' gefördert werden. Auch diese vierte Pufferstation 7' besteht aus drei parallel zueinander angeordneten Transportstrecken 22'.

Nach der entsprechenden Aushärtezeit wird das Formwerkzeug in die Entnahmestation 2" gefördert, welche mit Aktoren versehen ist, die zum Öffnen der Formwerkzeugteile und zum Entnehmen des fertigen Schuhs dienen. Die fertigen Schuhe 9' werden nach rechts abgeführt. Das geöffnete und entleerte Formwerkzeug 21 wird über das Transportband 20 in eine Reinigungsstation 8 gefördert, von wo das gereinigte Formwerkzeug dem Kreislauf entweder wieder zugeführt wird oder aber bei 23 aus dem Kreislauf entfernt wird.

Die zuvor beschriebene Vorrichtung dient zur Herstellung zweilagiger Schuhsohlen.

Soll ein Schuh mit lediglich einer einlagigen Sohle hergestellt werden, ergeben sich keine konstruktiven Änderungen an der Gesamtanlage. In diesem Fall wird das in der Vorbereitungsstation 2 vorbereitete Formwerkzeug an der ersten Einspritzstation 6 und der ersten Pufferstation 7 (Pfeil 24) vorbei gefördert und gelangt direkt in die zweite Vorbereitungsstation 2', wo es mit dem Leisten 9 versehen wird. Der weitere Verfahrensablauf ist mit dem ersten identisch.

## Patentansprüche

1. Verfahren zur vollautomatischen Herstellung von Schuhen, bei dem eine mindestens einlagige Sohle direkt an einen auf einen Leisten gezogenen Schaft angespritzt wird, wobei Formwerkzeuge (21) zur Formung der Sohle nacheinander vor mindestens ein Einspritzaggregat (5) gefahren werden,
**dadurch gekennzeichnet,**
**daß** in einem Kreislauf die Formwerkzeuge (21) über ein Transportsystem (20) in mindestens eine Vorbereitungsstation (22') gefahren werden, in der sie zur Erzeugung eines Sohlenformhohlraumes allseitig geschlossen, von dort in eine erste Pufferstation (3) weitertransportiert werden, aus der die so vorbereiteten Formwerkzeuge nacheinander in eine Einspritzstation (6) gelangen und dort fixiert und justiert werden, wonach sie eines nach dem anderen vor das Einspritzaggregat (5) bewegt werden, in der der Einspritzvorgang erfolgt, nach welchem das jeweils gefüllte Formwerkzeug (21) weiterbewegt wird, aus der Einspritzstation (6) entfernt und in eine zweite Pufferstation transportiert wird, aus der das jeweilige Formwerkzeug nach einer definierten Abkühlzeit in eine Entnahmestation (2") gefahren wird, in der das Formwerkzeug (21) geöffnet und der fertige Schuh (9') entnommen wird, während das geöffnete und geleerte Formwerkzeug (21) über eine Reinigungsstation (8) dem Kreislauf wieder zugeführt bzw. aus dem Kreislauf (23) entfernt wird.

2. Verfahren nach Anspruch 1,
**dadurch gekennzeichnet,**
**daß** zur Herstellung von Schuhen mit mehrlagigen Sohlen das jeweilige Formwerkzeug (21) in der ersten Vorbereitungsstation (2) beim Schließvorgang nach ober durch einen Verdränger geschlossen und das so vorbereitete Formwerkzeug (21) nach Durchlauf der ersten Pufferstation einer ersten Einspritzstation (6) zugeführt und dort fixiert wird, in dieser Einspritzstation die Laufsohle gespritzt wird, das gefüllte Formwerkzeug (21) aus der Einspritzstation (6) entnommen und in eine zweite Pufferstation (7) transportiert wird, aus der es in eine zweite Vorbereitungsstation (2') bewegt wird, in der der Verdränger durch einen über eine separate Zuführung angelieferten, mit einem Schuhschaft bezogenen Leisten (9) ersetzt wird, so vorbereitet in eine dritte Pufferstation 3' gelangt, von der es in eine zweite Einspritzstation (6') eingesetzt wird, in der ein Bodenstempel um einen bestimmten Betrag abgesenkt wird und in den entstandenen Zwischenraum zwischen bereits gespritzter Laufsohle und Leisten die Zwischensohle gespritzt wird, wonach das derart gefüllte Formwerkzeug aus der Einspritzstation (6') entnommen und in eine vierte Pufferstation (7') gefördert wird, aus der es nach einer definierten Abkühlzeit in eine Entnahmestation (2") gelangt, in der das Formwerkzeug geöffnet und der fertige Schuh (9') entnommen wird, wonach das leere Formwerkzeug über eine Reinigungsstation (8) dem Kreislauf wieder zugeführt bzw. aus dem Kreislauf (23) entfernt wird.

3. Verfahren nach Anspruch 1 oder 2,
**dadurch gekennzeichnet,**
**daß** vor dem Einfahren des Formwerkzeugs (21) in die erste Vorbereitungsstation die Formflächen bestehend aus einem Bodenstempel, Seitenformteilen und einem Verdränger mit einem Trennmittel eingesprüht werden.

4. Verfahren nach einem der Ansprüche 1 bis 3,
**dadurch gekennzeichnet,**
**daß** dem Formwerkzeug (21) am Beginn des Kreislaufs für den/die Spritzvorgang/-vorgänge relevante Daten aufgegeben werden.

5. Verfahren nach Anspruch 4,
**dadurch gekennzeichnet,**
**daß** die Daten die jeweilige Einspritzzeit und -geschwindigkeit, die jeweilige Aushärtzeit, die jeweilige Leistenart. umfassen.

6. Verfahren nach einem der Ansprüche 1 bis 5,
**dadurch gekennzeichnet,**
**daß** die gefüllten Formwerkzeuge (21) in den an die mindestens eine Einspritzstation anschließenden Pufferstationen (7, 7') unterschiedliche Verweil- und damit Aushärtzeiten aufweisen.

7. Verfahren nach einem der Ansprüche 1 bis 6,
**dadurch gekennzeichnet,**
**daß** in den Pufferstationen (3, 3', 7 ,7') und/oder den Einspritzstationen (6, 6') die Formwerkzeuge temperiert werden.

8. Vorrichtung zur Durchführung des Verfahrens nach einem der Ansprüche 1 bis 7,
**gekennzeichnet durch** ein einen Kreislauf bildendes Transportsystem aus Transportbändern (20), das mindestens eine Vorbereitungsstation (2) mit Aktoren zum Schließen und eine Entnahmestation (2") mit Aktoren zum Öffnen von auf den Transportbändern (20) transportierten Formwerkzeugen (21) aufweist, sowie **durch** eine Zuführungsvorrichtung für mit Schäften bezogene Leisten (9), und **durch** mindestens eine Einspritzstation (6), die mindestens einer Vorbereitungsstation (2) nachgeordnet ist, wobei in der Einspritzstation (6) mehrere für den Spritzvorgang vorbereitete Formwerkzeuge (21) derart fixiert und justiert sind, nachdem sie **durch** eine zwischen Transportband (26) und Einspritzstation (6) angeordnete Handhabungseinrichtung vom Transportband (20) in die Einspritzstation (6) eingesetzt worden sind, daß sie nacheinander an ein der Einspritzstation (6) zugeordnetes Einspritzaggregat (5) heranfahrbar sind, sowie **durch** eine der mindestens einen Einspritzatation (6) nachgeordneten Pufferstation (7), der eine Station zum Öffnen der Formwerkzeuge nachgeordnet ist, sowie **durch** eine dieser Station nachgeordnete Entnahmestation (2") für die fertigen Schuhe (9') und eine Reinigungsstation (8) für die entleerten und geöffneten Formwerkzeuge (21).

9. Vorrichtung nach Anspruch 8,
**dadurch gekennzeichnet,**
**daß** zwei Einspritzstationen (6, 6') mit ihnen zugeordneten Handhabungseinrichtungen und ihnen nachgeordneten Pufferstationen (7, 7') vorgesehen sind, wobei jeder Einspritzstation (6, 6') eine mit Aktoren versehene Vorbereitungsstation (2,2') vorgeschaltet ist, jedoch lediglich der im Kreislauf letzten Einspritzstation (6') eine Entnahmestation (2") der Formwerkzeuge (21) nachgeordnet ist.

10. Vorrichtung nach Anspruch 8 oder 9,
**dadurch gekennzeichnet,**
**daß** zwischen der jeweiligen Handhabungseinrichtung und der jeweiligen Vorbereitungsstation (2, 2') eine weitere Pufferstation (3, 3') angeordnet ist.

11. Vorrichtung nach einem der Ansprüche 8 bis 10,
**dadurch gekennzeichnet,**
**daß** der im Kreislauf ersten Vorbereitungsstation (2) eine Formeinsprüheinrichtung (1) vorgeschaltet ist.

12. Vorrichtung nach einem der Ansprüche 8 bis 11,
**dadurch gekennzeichnet,**
**daß** die der mindestens einer Einspritzstation nachgeordnete Pufferstation (7, 7') mehrere parallel zueinander verlaufende Transportstrecken (22) aufweist.

13. Vorrichtung nach einem der Ansprüche 8 bis 12,
**dadurch gekennzeichnet,**
**daß** jedes Formwerkzeug (21) ein Speicherelement zur Aufnahme und Abgabe von den Transport- und Spritzvorgang betreffenden Daten aufweist.

14. Vorrichtung nach einem der Ansprüche 8 bis 13,
**dadurch gekennzeichnet, daß** mindestens eine Einspritzstation (6, 6') einen die Mehrzahl von Formwerkzeugen aufnehmenden Rundtisch aufweist.

15. Vorrichtung nach einem der Ansprüche 8 bis 14,
**dadurch gekennzeichnet,**
**daß** die Bewegung der Formwerkzeuge in der Einspritzstation (6, 6') zur Kontaktierung mit dem Einspritzaggregat (5, 5') durch vom Einspritzaggregat kommende Signale steuerbar ist.

16. Vorrichtung nach einem der Ansprüche 8 bis 15,
**dadurch gekennzeichnet,**
**daß** in den Pufferstationen (3, 3', 7, 7') und/oder in mindestens einer Einspritzstation Mittel zum Temperieren der Formwerkzeuge vorgesehen sind.

## Claims

1. A process for the fully automated manufacture of shoes, in which a sole of at least one ply is moulded directly onto an upper drawn onto a last, moulding tools (21) for moulding the sole being moved one after the other in front of at least one injection unit (5), **characterised in that** the moulding tools (21) are moved in a circuit by way of a transport system (20) into at least one preparation station (22') in which they are closed on all sides in order to produce a shoe moulding cavity, are transported on from there into a first buffer station (3) from which the moulding tools prepared in this way arrive one after the other in an injection station (6) and are there fixed and adjusted, after which they are moved one after the other in front of the injection unit (5), in which the injection procedure takes place, after which the respectively filled mould cavity (21) is moved on, removed from the injection station (6) and transported into a second buffer station from which after a defined cooling time the respective moulding tool is moved into a removal station (2") in which the moulding tool (21) is opened and the finished shoe (9') is removed, while the opened and emptied moulding tool (21) is by way of a cleaning station (8) supplied to the circuit again or removed from the circuit (23).

2. A process according to Claim 1, **characterised in that** to manufacture shoes having soles of multiple plies, in the first preparation station (2), during the closing procedure, the respective moulding tool (21) is closed upwardly by a displacement means and the moulding tool (21) prepared in this way, after passing through the first buffer station, is supplied to a first injection station (6) and fixed there, the bottom sole is injected in this injection station, the filled moulding tool (21) is removed from the injection station (6) and transported to a second buffer station (7) from which it is moved into a second preparation station (2') in which the displacement means is replaced by a last (9) which is fitted with a shoe upper and is brought in by way of a separate supply, and prepared in this way arrives in a third buffer station (3') from which it is inserted into a second injection station (6') in which a lower die is lowered by a specific amount and in the intermediate space created between the bottom sole, which has already been injected, and the last the intermediate sole is injected, after which the moulding cavity filled in this way is removed from the injection station (6') and conveyed to a fourth buffer station (7') from which after a defined cooling time it arrives in a removal station (2") in which the moulding tool is opened and the finished shoe (9') is removed, after which the empty moulding tool is by way of a cleaning station (8) supplied to the circuit again or removed from the circuit (23).

3. A process according to Claim 1 or 2, **characterised in that** before the moulding tool (21) is brought into the first preparation station the mould surfaces, comprising a lower die, side mould parts and a displacement means, are sprayed with a release agent.

4. A process according to one of Claims 1 to 3, **characterised in that** data relevant for the injection procedure or procedures is output to the moulding tool (21) at the beginning of the circuit.

5. A process according to Claim 4, **characterised in that** the data comprises the respective injection time and speed, the respective curing time and the respective type of last.

6. A process according to one of Claims 1 to 5, **characterised in that** the filled moulding tools (21) have different dwell times and hence curing times in the buffer stations (7, 7') adjoining the at least one injection station.

7. A process according to one of Claims 1 to 6, **characterised in that** the temperature of the moulding tools is adjusted in the buffer stations (3, 3', 7, 7') and/or the injection stations (6, 6').

8. A device for carrying out the process according to one of Claims 1 to 7, **characterised by** a transport system which forms a circuit and comprises conveyor belts (20) and has at least one preparation station (2) with actuators for closing and a removal station (2") with actuators for opening moulding tools (21) transported on the conveyor belts (20), and by a supply device for lasts (9) fitted with uppers, and by at least one injection station (6) which is arranged downstream of at least one preparation station (2), a plurality of moulding tools (21) prepared for the injection procedure being fixed and adjusted in the injection station (6) such that, after they have been introduced into the injection station (6) by a handling device of the conveyor belt (20) which is arranged between the conveyor belt (20) and the injection station (6), they can be brought one after the other to an injection unit (5) associated with the injection station (6), and by a buffer station (7) which is arranged downstream of the at least one injection station (6) and downstream of which there is arranged a station for opening the moulding tools, and by a removal station (2") for the finished shoes (9') which is arranged downstream of this station, and a cleaning station (8) for the emptied and opened moulding tools (21).

9. A device according to Claim 8, **characterised in that** two injection stations (6, 6') are provided with handling devices associated therewith and buffer stations (7, 7') arranged downstream thereof, a preparation station (2, 2') which is provided with actuators being arranged upstream of each injection station (6, 6') but only one removal station (2") for opening the moulding tools (21) being arranged downstream of the last injection station (6') in the circuit.

10. A device according to Claim 8 or 9, **characterised in that** a further buffer station (3, 3') is arranged between the respective handling device and the respective preparation station (2, 2').

11. A device according to one of Claims 8 to 10, **characterised in that** a mould spraying device (1) is arranged upstream of the first preparation station (2) in the circuit.

12. A device according to one of Claims 8 to 11, **characterised in that** the buffer station (7, 7') arranged downstream of the at least one injection station has a plurality of transport sections (22) extending parallel to one another.

13. A device according to one of Claims 8 to 12, **characterised in that** each moulding tool (21) has a storage element for receiving and emitting data relating to the transport and injection procedures.

14. A device according to one of Claims 8 to 13, **characterised in that** at least one injection station (6, 6') has a rotary table receiving the plurality of moulding tools.

15. A device according to one of Claims 8 to 14, **characterised in that** the movement of the moulding tools in the injection station (6, 6') for making contact with the injection unit (5, 5') is controllable by signals coming from the injection unit.

16. A device according to one of Claims 8 to 15, **characterised in that** means for adjusting the temperature of the moulding tools are provided in the buffer stations (3, 3', 7, 7') and/or in at least one injection station.

## Revendications

1. Procédé de fabrication entièrement automatique de chaussures, dans lequel une semelle à au moins une couche est directement moulée par injection sur une tige montée sur une forme, des outils de moulage (21) pour le moulage de la semelle étant déplacés l'un après l'autre devant au moins un groupe d'injection (5),
**caractérisé**
**en ce que** des outils de moulage (21) sont déplacés en un circuit, au moyen d'un système de transport, dans au moins un poste de préparation (22), dans lequel ils sont fermés de tous côtés pour produire une cavité de moulage de semelle, à partir de là, ils sont transportés plus loin dans un premier poste tampon (3) à partir duquel, les outils de moulage ainsi préparés parviennent l'un après l'autre dans un poste d'injection (6) et y sont fixés et ajustés, après quoi, ils sont déplacés l'un après l'autre devant le groupe d'injection (5) dans lequel se produit l'opération d'injection, après laquelle l'outil de moulage (21) rempli est transporté plus loin, est enlevé du poste d'injection (6) et est transporté dans un deuxième poste tampon, à partir duquel l'outil de moulage concerné est déplacé, après un temps de refroidissement défini, dans un poste d'enlèvement (2"), dans lequel l'outil de moulage (21) est ouvert et la chaussure finie (9') est enlevée, tandis que l'outil de moulage (21) ouvert et vidé est renvoyé dans le circuit, à travers un poste de nettoyage (8) ou est enlevé du circuit (23).

2. Procédé selon la revendication 1,
**caractérisé**
**en ce que** pour la fabrication de chaussures à semelle à plusieurs couches, chaque outil de moulage (21) est fermé vers le haut dans le premier poste de préparation (2), lors de l'opération de fermeture, au moyen d'un dispositif déplaceur, et l'outil de moulage (21) ainsi préparé, après avoir traversé le premier poste tampon, est acheminé vers un premier poste d'injection (6) et y est fixé, dans ce poste d'injection, la semelle d'usure est injectée, l'outil de moulage (21) rempli est prélevé du poste d'injection (6) et est transporté dans un deuxième poste tampon (7), à partir duquel il est déplacé dans un deuxième poste de préparation (2') dans lequel le dispositif déplaceur est remplacé par une forme (9) sur laquelle est montée une tige de chaussure, amenée par une amenée séparée, ainsi préparé il parvient dans un troisième poste tampon (3) à partir duquel il est inséré dans un deuxième poste d'injection (6') dans lequel un piston de fond est abaissé d'une distance déterminée et dans l'interstice ainsi formé, entre la semelle d'usure déjà injectée et la forme, est injectée la semelle intermédiaire, après quoi l'outil de moulage ainsi rempli est prélevé du poste d'injection (6') et est transporté dans un quatrième poste tampon (7') à partir duquel, après un temps de refroidissement défini, il parvient dans un poste de prélèvement (2"), dans lequel l'outil de moulage est ouvert et la chaussure finie (9') est prélevée, après quoi l'outil de moulage vide est renvoyé dans le circuit, par un poste de nettoyage (8) ou est enlevé du circuit (23).

3. Procédé selon la revendication 1 ou 2,
**caractérisé**
**en ce qu'**avant l'entrée de l'outil de moulage (21) dans le premier poste de préparation, les surfaces de moule constituées d'un piston de fond, de parties latérales de moule et d'un dispositif déplaceur, sont pulvérisées avec un agent de démoulage.

4. Procédé selon l'une des revendications 1 à 3,
**caractérisé**
**en ce que** des données nécessaires pour la/les opérations d'injection sont données à l'outil de moulage (21) au début du circuit.

5. Procédé selon la revendication 4,
**caractérisé**
**en ce que** les données comprennent le temps et la vitesse respectifs d'injection, le temps de durcissement respectif, le type de forme respectif.

6. Procédé selon l'une des revendications 1 à 5,
**caractérisé**
**en ce que** les outils de moulage (21) remplis présentent des temps de séjour et donc de durcissement différents dans les postes tampons (7, 7') qui font suite au poste ou aux postes d'injection.

7. Procédé selon l'une des revendications 1 à 6,
**caractérisé**
**en ce que** dans les postes tampons (3, 3', 7, 7') et/ou les postes d'injection (6, 6'), les outils de moulage sont tempérés.

8. Dispositif pour la mise en ouvre du procédé selon l'une des revendications 1 à 7,
**caractérisé par** un système de transport formant un circuit, constitué de bandes de transport (20), qui comporte au moins un poste de préparation (2) avec des actionneurs pour la fermeture et un poste de prélèvement (2") avec des actionneurs pour l'ouverture d'outils de moulage (21) transportés sur les bandes de transport (20), ainsi qu'un dispositif d'amenée pour des formes (9) sur lesquels sont montées des tiges et par au moins un poste d'injection (6) qui est disposé en aval d'au moins un poste de préparation (2), dans le poste d'injection (6) plusieurs outils de moulage (21), préparés pour l'opération d'injection, sont fixés et ajustés, après avoir été insérés de la bande de transport (20) dans le poste d'injection (6), un dispositif de manipulation disposé entre la bande de transport (20) et le poste d'injection (6), de manière à pouvoir être approchés l'un après l'autre d'un groupe d'injection (5) affecté au poste d'injection (6), ainsi que par un poste tampon (7), disposé en aval du ou des postes d'injection (6) et en aval duquel est disposé un poste d'ouverture des outils de moulage, ainsi qu'un poste de prélèvement (2"), disposé en aval de ce poste, pour les chaussures (9) finies et un poste de nettoyage (8) pour les outils de moulage (21) vidés et ouverts.

9. Dispositif selon la revendication 8,
**caractérisé**
**en ce que** sont prévus deux postes d'injection (6, 6') avec des dispositifs de manipulation qui leur sont affectés et des postes tampons (7, 7') disposés en aval de ceux-ci, en amont de chaque poste d'injection (6, 6') est monté un poste de préparation (2, 2') pourvu d'actionneurs, mais seulement en aval du dernier poste d'injection (6') du circuit est disposé un poste de prélèvement (2") pour l'ouverture des outils de moulage (21).

10. Dispositif selon la revendication 8 ou 9,
**caractérisé**
**en ce qu'**un autre poste tampon (3, 3') est disposé entre le dispositif de manipulation respectif et le poste de préparation (2, 2') respectif.

11. Dispositif selon l'une des revendications 8 à 10,
**caractérisé**
**en ce qu'**en amont du premier poste de préparation (2) du circuit est monté un dispositif de pulvérisation de moule (1).

12. Dispositif selon l'une des revendications 8 à 11,
**caractérisé**
**en ce que** le poste tampon (7, 7'), disposé en aval du ou des postes d'injection, comporte plusieurs parcours de transport (22) parallèles entre eux.

13. Dispositif selon l'une des revendications 8 à 12,
**caractérisé**
**en ce que** chaque outil de moulage (21) comporte un élément de mémoire pour l'enregistrement et l'extraction de données concernant l'opération de transport et l'opération d'injection.

14. Dispositif selon l'une des revendications 8 à 13,
**caractérisé**
**en ce qu'**au moins un poste d'injection (6, 6') comporte un table circulaire recevant la pluralité d'outils de moulage.

15. Dispositif selon l'une des revendications 8 à 14,
**caractérisé**
**en ce que** le déplacement des outils de moulage dans le poste d'injection (6, 6') peut être commandé par des signaux provenant du groupe d'injection, pour la mise en contact avec le groupe d'injection (5, 5').

16. Dispositif selon l'une des revendications 8 à 15,
**caractérisé**
**en ce que** dans les postes tampons (3, 3', 7, 7') et/ou dans au moins un poste d'injection sont prévus des moyens pour tempérer les outils de moulage.
